# EUROPEAN PATENT SPECIFICATION

(11) **EP 3 068 157 B1**
(45) Date of publication and mention of the grant of the patent: **25.11.2020**
(21) Application number: 15191238.3
(22) Date of filing: 23.10.2015
(51) Int. Cl.: H04W 24/02

(54) **NETWORK MANAGEMENT**
NETZWERKVERWALTUNG
GESTION DE RÉSEAU

(30) Priority: 13.03.2015 WO PCT/FI2015/050167
(43) Date of publication of application: 14.09.2016
(73) Proprietor: Comptel Corporation, 00180 Helsinki (FI)
(72) Inventor: LACEY, Stephen, 03100 Nummela (FI); TYRODE, Daniel, RG42 5AF Bracknell (GB)
(74) Representative: Berggren Oy, Helsinki & Oulu

(56) References cited:
- US-A1- 2014 031 006
- HAHN WOLFGANG ET AL: "GW elasticity in data centers: Options to adapt to changing traffic profiles in control and user plane", 2015 18TH INTERNATIONAL CONFERENCE ON INTELLIGENCE IN NEXT GENERATION NETWORKS, IEEE, 17 February 2015 (2015-02-17), pages 16-22, XP032758456, DOI: 10.1109/ICIN.2015.7073801
- KARAGIANNIS GEORGIOS ET AL: "Mobile Cloud Networking: Virtualisation of cellular networks", 2014 21ST INTERNATIONAL CONFERENCE ON TELECOMMUNICATIONS (ICT), IEEE, 4 May 2014 (2014-05-04), pages 410-415, XP032612088, DOI: 10.1109/ICT.2014.6845149 ISBN: 978-1-4799-5139-0 [retrieved on 2014-06-26]
- "Network Functions Virtualisation (NFV); Architectural Framework", 3GPP DRAFT; GS_NFV002V010101P, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 4 November 2013 (2013-11-04), XP050767875, Retrieved from the Internet: URL:http://www.3gpp.org/ftp/tsg_sa/WG5_TM/ TSGS5_92/Docs/ [retrieved on 2013-11-04]

## Description

### FIELD OF INVENTION

The present invention relates to the field of network management, such as for example management of a communication network with virtualized functions.

### BACKGROUND OF INVENTION

Communication networks, such as for example cellular communication networks, are comprised of network nodes. The network nodes of a network may be subdivided into different node types, for example, a cellular communication network may comprise base stations, base station controllers, switches, gateways and application functions. An internet protocol, IP, network may comprise routers and gateways.

When designing a network, planners may estimate loading situations in a coverage area of the network. For example, in busy sections of cities it may be estimated that communication occurs more often, and at a higher intensity, than in outlying areas. Therefore, in the case of a cellular network, cells in busier areas may be made smaller, and base stations assigned to control these smaller cells may be furnished with sufficient data processing capability to handle high peak loads. For example, the base stations may be equipped with several data processing cards. Likewise, network nodes tasked with conveying data to and from base stations with high anticipated peak loads may be dimensioned to be capable of handling these high loads.

When network nodes dimensioned to handle high loads experience lower loads, for example at night, their instantaneous load factors may be low. On the other hand, in case usage patterns of a network change, for example, if an area that previously experienced only low usage becomes more highly loaded, capacity may be added to base stations and, possibly, to other nodes serving that area of the network. Such adding may involve installing more data processing cards and/or transceivers into base stations to cope with the load. Peak loads may increase in previously lightly loaded areas as cities or other areas develop. For example, the opening of a new airport, train station or the construction of a new apartment building may modify usage patterns of communication networks that are active in the area. Likewise where a network node develops a fault condition, network traffic previously routed through it may be diverted to rely on other nodes, where possible, affecting the load conditions of such other nodes.

Virtualization of network functions may be employed to simplify network maintenance. In a network where functions have been, at least in part, virtualized, virtualized network functions may be run as software entities on commodity server computers, which may be located in a datacentre, for example. Depending on the type of network function being virtualized, for example simple or complex, a virtualized network function, VNF, may be split into multiple VNF components, VNFCs. An example of a simple VNF is a firewall, while a home location register is an example of a complex VNF.

Hahn Wolfgang et al. disclose in "GW elasticity in data centers: Options to adapt to changing traffic profiles in control and user plane", 2015 18th International Conference on Intelligence in Next Generation Networks, IEEE, 17 February 2015 (2015-02-17), pages 16-22 an investigation of the behavior of two different implementations of gateway (GW) designs utilizing virtual machines (VMs) in response to changing traffic demands. A combined GW model is exhibited in which control plane and user plane traffic are processed on the same VM. VNF type may be changed periodically in order to adapt with the current traffic requirements, which was seen to lead to similar performance as a decomposed GW model in which user and control plane traffic is processed on different VMs.

KARAGIANNIS GEORGIOS ET AL: "Mobile Cloud Networking: Virtualisation of cellular networks", 2014 21ST INTERNATIONAL CONFERENCE ON TELECOMMUNICATIONS (ICT), IEEE, 4 May 2014 (2014-05-04) shows network function virtualisation concepts for achieving virtualisation of cellular networks.

### SUMMARY OF THE INVENTION

The invention is defined by the features of the independent claims. Some specific embodiments are defined in the dependent claims.

According to a first aspect, there is provided a system comprising a memory configured to store information characterizing network management actions, and at least one processing core configured to determine a developing fault condition, based at least in part on at least one of the following: a pattern of read/write errors and a pattern of status changes comprising a pattern of communication port status changes, and to initiate a network management action based at least in part on the determined developing fault condition, the network management action involving at least one virtualized network function.

Various embodiments of the first aspect may comprise at least one feature from the following bulleted list:
- the network management action comprises at least one of the following: increasing resources allocated to a virtualized network function or virtualized network function component, , starting a virtualized network function or virtualized network function component instance, terminating a virtualized network function or virtualized network function component instance and live migrating a virtualized network function or virtualized network function component instance
- the network management action comprises starting the virtualized network function or virtualized network function component on an alternative infrastructure to that of one developing the fault condition and may terminate the original virtualized network function or virtualized network function component involved with the developing fault condition
- the at least one processing core is configured to determine an importance of the virtualized network function or virtualized network function component, the virtualized network function being affected by the determined developing fault condition, and to select the network management action at least in part in dependence of the determined importance of the virtualized network function
- the at least one processing core is configured to determine the developing fault condition based at least in part on a at least one of the following: a pattern of read/write errors and a pattern of status changes
- the pattern of status changes comprises a pattern of communication port status changes
- the read/write errors comprise at least one of random access memory read/write errors, solid state drive read/write errors and magnetic disk read/write errors
- the at least one virtualized network function comprises at least one of the following: a virtualized base station function, a virtualized call session control function, CSCF, a virtualized switching centre, a virtualized mobility management entity, a virtualized home subscriber server, a virtualized equipment identity register and a virtualized gateway function
- the memory and the at least one processing core are comprised in a virtualized cellular communication network management device and the system further comprises a network functions virtualization orchestrator function configured to, responsive to a trigger from the virtualized cellular communication network management device, cause the network management action to be implemented
- the at least one processing core is configured to determine the developing fault condition in at least one of the virtualized network function or virtualized network function component and a computation apparatus arranged to run the virtualized network function or virtualized network function component
- the at least one processing core is configured to determine the developing fault condition in the computation apparatus, to determine a plurality of virtualized network functions or virtualized network function components running in the computation apparatus, and to arrange at least two from among the plurality of virtualized network functions or virtualized network function components according to their relative priority.

According to a second aspect, there is provided a method comprising storing information characterizing network management actions, determining a developing fault condition based at least in part on at least one of the following: a pattern of read/write errors and a pattern of status changes comprising a pattern of communication port status changes, and initiating a network management action based at least in part on the determined developing fault condition, the network management action involving at least one virtualized network function or virtualized network function component

Various embodiments of the second aspect may comprise at least one feature corresponding to a feature comprised in the preceding bulleted list laid out in connection with the first aspect.

According to a third aspect, there is provided an apparatus comprising at least one processing core and at least one memory including computer program code, the at least one memory and the computer program code being configured to, with the at least one processing core, cause the apparatus at least to store information characterizing network management actions, determine a developing fault condition based at least in part on at least one of the following: a pattern of read/write errors and a pattern of status changes comprising a pattern of communication port status changes, and initiate a network management action based at least in part on the determined fault developing condition, the network management action involving at least one virtualized network function or virtualized network function component.

According to a fourth aspect, there is provided an apparatus comprising means for storing information characterizing network management actions, means for determining a developing fault condition based at least in part on at least one of the following: a pattern of read/write errors and a pattern of status changes comprising a pattern of communication port status changes, and means for initiating a network management action based at least in part on the determined developing fault condition, the network management action involving at least one virtualized network function or virtualized network function component.

According to a fifth aspect, there is provided a non-transitory computer readable medium having stored thereon a set of computer readable instructions that, when executed by at least one processor, cause an apparatus to at least store information characterizing network management actions, determine a developing fault condition based at least in part on at least one of the following: a pattern of read/write errors and a pattern of status changes comprising a pattern of communication port status changes, and initiate a network management action based at least in part on the determined developing fault condition, the network management action involving at least one virtualized network function or virtualized network function component.

### Brief Description of the Drawings

FIGURE 1A illustrates an example system for explaining at least some embodiments of the present invention;
FIGURE 1B illustrates an example system capable of supporting at least some embodiments of the present invention;
FIGURE 2 illustrates an example network architecture in accordance with at least some embodiments of the present invention;
FIGURE 3 illustrates an example apparatus capable of supporting at least some embodiments of the present invention;
FIGURE 4A illustrates signalling in accordance with at least some embodiments of the present invention;
FIGURE 4B illustrates signalling in accordance with at least some embodiments of the present invention, and
FIGURE 5 is a first flow chart of a first method in accordance with at least some embodiments of the present invention.

### DETAILED DESCRIPTION OF EXAMPLE EMBODIMENTS

In networks employing virtualization of at least some functions thereof, network management actions may be triggered as a response to fault conditions that either arise suddenly, or are seen to develop over time. For example, where a network management entity determines a progressive fault condition in a virtualized network function or virtualized network function component, or a computational substrate running such, a network management action may be taken to prevent the already occurred or developing fault condition from becoming apparent to end users. Thus, for example, network connections may be migrated from a computational substrate or virtualized network function or virtualized network function component that has become unstable to a stable one, and perceived connection quality may be maintained.

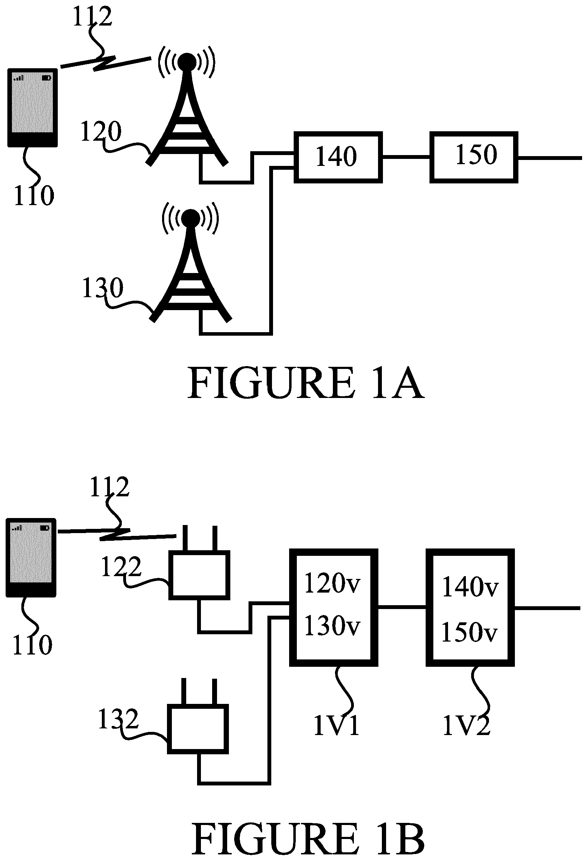

FIGURE 1A illustrates an example system for explaining at least some embodiments of the present invention. In a cellular network example, mobile 110 is in communication with base station 120 via wireless link 112. Mobile 110 may comprise, for example, a smartphone, a phablet, a cellular phone, a tablet computer or a laptop computer. Wireless link 112 may be arranged to operate in accordance with a wireless technology that both mobile 110 and base station 120 are configured to support. Suitable technologies include, for example, wideband code division multiple access, WCDMA, long term evolution, LTE, and CDMA2000.

Base station 120 is operably connected to core network node 140. Core network node 140 may comprise, for example, a mobility management entity, MME, or a router. Core network node 140 is further operably connected to further core network node 150. Further core network node 150 may comprise a gateway, for example, configured to provide access to further networks, such as the Internet, for example. Thus mobile 110 may obtain access to the further networks via base station 120, core network node 140 and further core network node 150. Base station 120 may be dimensioned to be capable of serving a maximum load in the location where the cell or cells it controls are located.

Base station 130 may be similar to base station 120, and comprised in the same radio-access network as base station 120. Like base station 120, also base station 130 is operably connected to core network node 140. The connections between the base stations and core network node 140 may be wire-line connections, or alternatively they may be at least in part wireless.

Although discussed in terms of a cellular network, a non-cellular network would equally serve to illustrate an example system. Examples of non-cellular technologies include wireless local area network, WLAN, also known as Wi-Fi, and worldwide interoperability for microwave access, WiMAX. Embodiments of the present invention may also be applied, in suitable form, to wire-line networks, such as IP networks, where wireless links do not occur.

FIGURE 1B illustrates an example system capable of supporting at least some embodiments of the present invention. Like numbering in FIGURE 1B denotes like structure as in FIGURE 1A. In the system of FIGURE 1B, mobile 110 has a wireless link 112 with radio node 122. Radio node 122 is a reduced version of base station 120 comprising radio hardware but less, or no, information processing functions. Radio node 132 likewise takes the place of base station 130 in the system of FIGURE 1B. Radio node 122 and radio node 132 are both separately connected with server 1V1, which comprises a computer system configured with computing resources, such as processing cores and memory, arranged to be able to run the information processing capabilities of base stations of FIGURE 1A that are absent in the radio nodes of FIGURE 1B. In other words, compared to the system of FIGURE 1A, at least part of the information processing functions of base stations 120 and 130 have been moved to server 1V1 in the system of FIGURE 1B.

The information processing functions relating to radio node 122 that take place in server 1V1 are denoted as virtualized base station 120v. The information processing functions relating to radio node 132 that take place in server 1V1 are denoted as virtualized base station 130v.

Server 1V2 is in the system of FIGURE 1B configured to run virtualized versions of core network nodes. In the system of FIGURE 1B, server 1V2 runs a virtualized core network node 140v offering similar functionality as core network node 140 in FIGURE 1A, and a virtualized further core network node 150V offering the same functionality as further core network node 150 in FIGURE 1A. In use virtualized base station 120v may receive information from radio node 122 and perform processing operations on the received information. Virtualized base station 120v may be configured to forward information it has processed to virtualized core network node 140v in server 1V2, for example.

Servers 1V1 and 1V2 may be based on generic computation technology, such as a set of x86-architecture multi-core processors or reduced instruction set computing, RISC, processors, for example. Server 1V1 need not be based on the same computation technology as server 1V2.

In general, a virtualized network function may comprise a software entity on generic computing hardware that is configured to perform, at least in part, according to a same specification as a corresponding network function that has not been virtualized, that is, one that runs on dedicated hardware. In other words, a virtualized network function may comprise a software implementation of a logical network node of a communication network. This has the effect that in terms of other network elements, these other elements needn't know whether the network element has been virtualized or not. Therefore, a virtualized call session control function, CSCF, for example, can be sent the same kinds of messages as a non-virtualized CSCF. A virtualized network function may comprise of multiple virtualized network function components.

The system of FIGURE 1B offers advantages over the system of FIGURE 1A. In detail, virtualized base station 120v may be scaled according to need, whereas base station 120 must be dimensioned for the maximum expected load at all times. For example, when load is light, virtualized base station 120v may be run with a few, or only one, processing core in server 1V1, while other processing cores of server 1V1 may be used for other processing tasks, such as grid computing, for example. As a response to increasing load via radio node 122, virtualized base station 120v may be allocated more processing cores in a dynamic network management action.

The system of FIGURE 1B may perform network management actions, each network management action involving at least one virtualized network function or virtualized network function component. Virtualized network functions may comprise, for example, virtualized base stations and/or virtualized core network nodes. The network management action may comprise at least one of the following: increasing resources allocated to a virtualized network function or virtualized network function component, decreasing resources allocated to a virtualized network function or virtualized network function component, starting a virtualized network function or virtualized network function component instance, and terminating a virtualized network function or virtualized network function component instance. A further example of a network management action is a live migration of a virtualized network function or virtualized network function component.

Increasing resources allocated to a virtualized network function or virtualized network function component may comprise allocating at least one more processing core and/or more memory to the virtualized network function. Alternatively to allocating an entire processing core, a timeshare of a processing core may be allocated to the virtualized network function or virtualized network function component. A timeshare may comprise, for example 25% of clock cycles or 50% of clock cycles of a processing core. Decreasing resources allocated to a virtualized network function or virtualized network function component may comprise de-allocating a processing core, a timeshare of a processing core and/or memory from the virtualized network function.

Starting a virtualized network function or virtualized network function component instance may comprise initializing, for example based at least in part on a template, a new virtualized network function or virtualized network function component. In terms of FIGURE 1B, this might comprise, for example, initializing a further virtualized core network node, "160v" in server 1V2. The new virtualized network function, or node, may be allocated resources in terms of at least one processor core and memory. Terminating a virtualized network function may correspondingly comprise ending processor tasks that run the virtualized network function. Terminating may be smooth in nature, wherein, for example, any users served by a virtualized network function that is to be terminated may be handed over to another virtualized network function, to avoid broken connections.

A live migration network management action may comprise transferring a state of a virtualized network function or virtualized network function component from a first server to a second server. For example, in case server 1V1 becomes unstable, virtualized base station 120v may be live migrated to server 1V2. Live migrating may thus comprise either transferring an entire process or group of processes, including memory blocks allocated thereto, or it may alternatively comprise, at least in part, starting a virtualized network function or virtualized network function component of corresponding type in the receiving server, and transferring a context of the virtualized network function that is to be live migrated. A context may comprise information concerning current activity or a virtualized network function or virtualized network function component, and its transfer may enable the new virtualized network function or virtualized network function component to function as the old one, with no disruption necessarily being perceptible to an end user, such as a user of mobile 110.

Alternatively to two servers 1V1 and 1V2, another number of servers may be employed in dependence of the embodiment and network implementation. For example, one, three or seven servers may be used. In general, a server is an example of a computation apparatus arranged to run virtualized network functions or virtualized network function component. Such an apparatus may alternatively be referred to as a computational substrate.

The system of FIGURE 1B may perform network management actions responsive to load status, congestion or user intervention. Alternatively or additionally, the system may perform network management actions responsive to determining a fault condition. The determined fault condition may be a fault condition that has already occurred. The determined fault condition may be a fault condition that is developing, that is, the fault condition may not yet, at the time it is determined, cause complete outage of a virtualized network function or virtualized network function component or computation apparatus affected by the developing fault condition.

A system may be configured to determine a developing fault condition based at least in part on at least one of the following: a pattern of read/write errors and a pattern of status changes. A pattern of status changes may comprise a pattern of communication port status changes. Read/write errors may comprise at least one of random access memory read/write errors, solid state drive read/write errors and magnetic disk read/write errors

When the network can act predictively, as opposed to responsive to an already occurred fault condition, the network can reallocate resources in a smoother way. In some cases, without predictive operation outage might occur in case a fault condition occurs rapidly and the network cannot adapt to the fault fast enough. Using a predictive approach, resources may be freed from other uses before the need to allocate them to virtualized network functions or virtualized network function component affected by a developing fault occurs. In other words, predictive resource allocation increases the flexibility at which a network operator can, for example, adapt to a developing fault condition. The network can smoothly run down or hibernate grid computing tasks, for example, and begin re-allocating resources, such as processing cores and/or memory, responsive to a determination of a developing fault condition.

When a fault condition affects a plurality of VNFs or VNFCs, for example, when the fault condition relates to a computation apparatus where the VNFs are running on, the network may determine which VNFs or VNFCs are more important from among the VNFs or VNFCs affected by the fault condition. These most important VNFs or VNFCs may be prioritized when performing network management actions, for example by live migrating these VNFs or VNFCs to another computation apparatus, or scaling these VNFs or VNFCs out, before other VNFs or VNFCs. Such prioritization may be based on a pre-defined priority of VNFs or VNFCs, or VNF/VNFC priority may be dynamic, for example based on the nature of traffic they are instantaneously running. As a specific example, VNFs involved in emergency telephone calls may be prioritized over VNFs involved in non-emergency telephone calls. Thus the probability that a developing fault condition will cause a high-priority VNF to fail may be reduced.

Also in case only one VNF is affected by a fault condition, the network management action selected may depend on the importance, or priority, of the VNF. For example, a scale-out operation may have a lower likelihood of preventing failure in the affected VNF, so a live migration network management operation may be selected instead in case the affected VNF has high priority, in other words, has higher importance.

In some embodiments, responsive to determining a developing fault condition, at least one VNF affected by the developing fault condition may be instantiated on another computational substrate, and the original instance may be terminated.

In general, by VNF it may be referred to a specific VNF instance, or a VNFC or set of VNFCs comprised in a VNF instance. A VNF instance may comprise VNFCs that are present on distinct computational substrates.

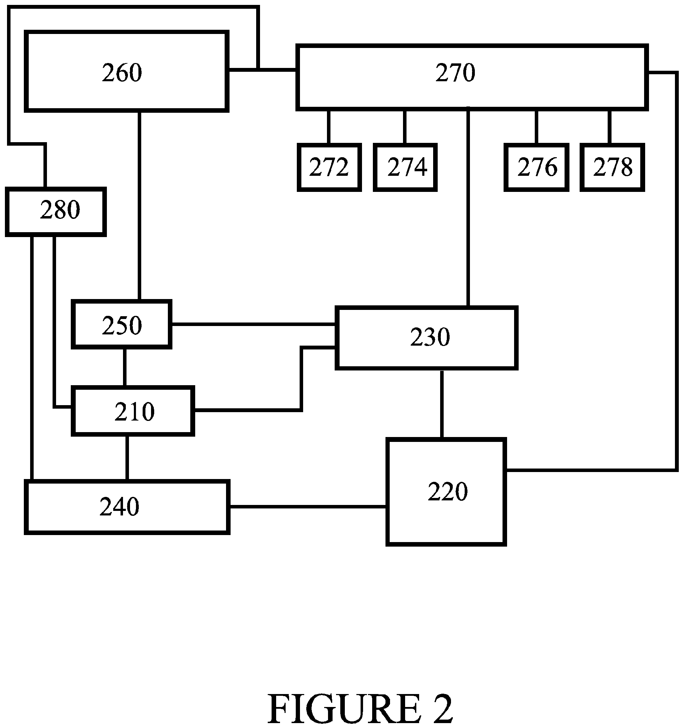

FIGURE 2 illustrates an example network architecture in accordance with at least some embodiments of the present invention. In FIGURE 2, VNF 210 comprises a virtualized network function, such as for example a virtualized network function as described above in connection with FIGURE 1B. VNF 210 has an interface with VNF manager 230, wherein VNF manager 230 may be configured to initiate network management actions, for example, responsive to changes in a loading level of virtualized network functions or responsive to a determined fault condition. VNF manager 230 has an interface with virtualized infrastructure manager, VIM, 220. VIM 220 may implement a monitoring function to detect virtualized network functions that cross loading or other predefined thresholds, to responsively trigger network management actions. For example, where a loading level exceeds a first threshold, more resources may be allocated to the virtualized network function, and/or where the loading level decreases below a second threshold, resources may be allocated from the virtualized network function to other uses. NFV orchestrator, NFVO, 270 and/or another node may be configured to respond to predefined or machine-learned propensity scores, wherein a propensity score associates a network management action with at least one operating condition of the network. The architecture may comprise a plurality of VNFs 210, VIMs 220 and/or a plurality of VNF managers 230.

Both VNF 210 and VIM 220 have interfaces to network functions virtualization infrastructure, NFVI, 240. NFVI 240 may provide a set of hardware and software components that build up the environment in which VNFs are deployed. VNF 210 further has an interface with element manager, EM, 250. EM 250 may provide end-user functions for management of a set of related types of network elements which may include network elements with virtualized network functions or non-virtualized network functions, or both. These functions may be divided into two main categories: Element Management Functions and Sub-Network Management Functions. In some embodiments, EM 250 may be configured to take decisions concerning network management actions, and to cause the decisions to be implemented by signalling concerning them to VNF manager 230, for example. EM 250 may take decisions concerning network management functions as a response to a determined fault condition, for example. EM 250 has an interface with operational support systems and/or business support systems, OSS/BSS 260. OSS/BSS 260 may be configured to support end-to-end telecommunication services. OSS/BSS 260 may implement load monitoring. OSS/BSS 260 in turn has an interface with NFV Orchestrator, NFVO, 270. NFVO 270 may comprise a functional block that manages network service, NS, lifecycles and coordinates the management of the NS lifecycles, VNF lifecycles and NFVI 240 resources to ensure an optimized allocation of resources and connectivity. NFVO 270 has interfaces with each of NS catalogue 272, VNF catalogue 274, network functions virtualization, NFV, instances 276 and NFVI resources 278. VIM 220 may further have an interface with NFVO 270. VNF manager 230 may likewise have an interface with NFVO 270.

In some embodiments, a predictive entity 280 is configured to act predictively and trigger network management actions in the system illustrated in FIGURE 2. For example, predictive entity 280 may instruct NFVO 270 to implement a predictively determined network management action in the network of FIGURE 2. Predictive entity 280 has an interface, such as for example a standard interface, with NFVO 270. Predictive entity 280 may alternatively or additionally comprise other interfaces such as for example a standard interface, with VIM 270. To enable this, predictive entity may be configured to receive and collect information on network management actions performed in the network of FIGURE 2 and determine patterns therein. Predictive entity 280 may be arranged to receive information from at least one VNF 210, and/or at least one VIM 220 and/or at least one NFVI 240. Alternatively, predictive entity 280 may be configured with information describing patterns it is to use in predictively triggering network management actions. Predictive entity 280 may be comprised together with NFVO 270, VNFM 230 or OSS/BSS 260, for example.

Predictive entity 280 may comprise an interface to NFV 210 and/or NFVI 240, and/or VIM 220 or a node configured to collect data therefrom. Predictive entity 280 may comprise a mediation service, a database or a big data storage for storing the collected data, a node configured to analyse the data, for example in real time, and to create a predictive analysis based on the data, and a node/interface configured to inform NFVO 270 directly or through OSS/BSS 260 and/or VIM 220. Predictive entity 280 can be run as a virtual service.

In some embodiments, to implement a network management resource scaling action, NFVO 270 instructs VIM 220 to give additional resources for at least one VNF 210. When VIM 220 acknowledges the additional resources, the NFVO 270 may inform the virtualized network function manager, VNFM, 230 to scale resources. As an option the NFVO 270 may first request the VNFM 230, if the VNF's are allowed to scale and what resources are needed to scale. In case of scaling down or in, NFVO 270 may inform VNFM 230 to scale VNF's, VNFM 230 may scale the resources and inform NFVO 270 about it, then NFVO 270 may inform the VIM 220 these resources are no longer used and the VIM 220 may then do so. It can also inform the NFVO 270 that the resources are no longer available.

In various embodiments, at least two entities illustrated in FIGURE 2 comprise software entities arranged to run on the same hardware resource.

While FIGURE 2 illustrates one example architecture, other architectures are possible in different embodiments of the invention. For example, where the network is an internet protocol, IP, network, the architecture may be simpler than that illustrated in FIGURE 2.

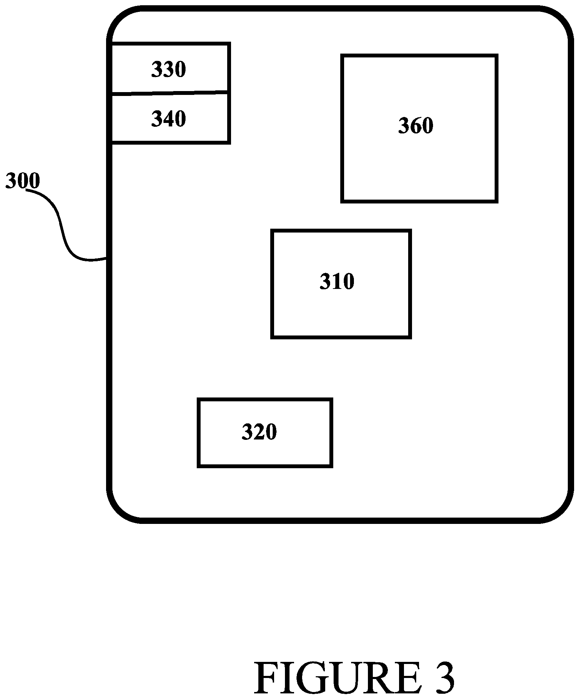

FIGURE 3 illustrates an example system capable of supporting at least some embodiments of the present invention. Illustrated is device 300, which may comprise, for example, a control node configured to control, at least in part, the operation of the network illustrated in FIGURE 1B or FIGURE 2. Device 300 may comprise one of the entities illustrated in the architecture of FIGURE 2 that may perform monitoring and/or triggering of network management actions. Alternatively, device 300 may be comprised in a node not illustrated in FIGURE 2, wherein device 300 may be configured to provide instructions to at least one node comprised in FIGURE 2. Device 300 may comprise a server, computation apparatus or computational substrate, for example. Comprised in device 300 is processor 310, which may comprise, for example, a single- or multi-core processor wherein a single-core processor comprises one processing core and a multi-core processor comprises more than one processing core. Processor 310 may comprise more than one processor. A processing core may comprise, for example, a Cortex-A8 processing core manufactured by ARM Holdings or a Steamroller processing core produced by Advanced Micro Devices Corporation. Processor 310 may comprise at least one Intel Core, Intel Xeon, AMD Opteron and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one communication standard. Transmitter 330 may comprise more than one transmitter. Receiver 340 may comprise more than one receiver. Transmitter 330 and/or receiver 340 may be configured to operate in accordance with Ethernet and/or Diameter communication standards, for example.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to initiate network management actions or configure loading thresholds.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, device 300 may comprise a fingerprint scanner to authenticate users. In some embodiments, device 300 lacks at least one device described above.

Processor 310, memory 320, transmitter 330 and/or receiver 340 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

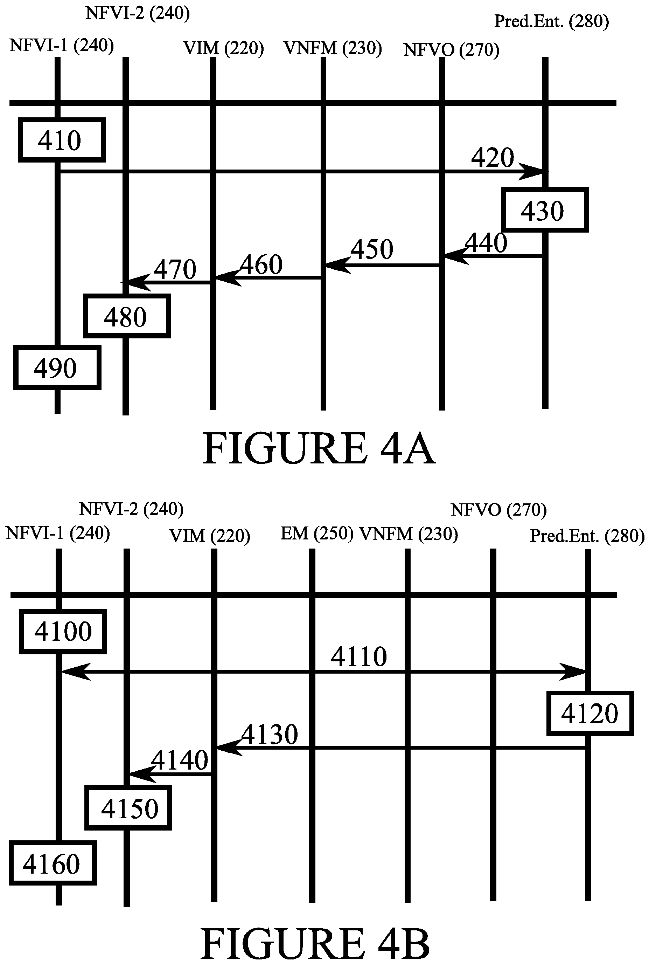

FIGURE 4A illustrates signalling in accordance with at least some embodiments of the present invention. On the vertical axes are disposed, from left to right, NFVI-1, NFVI-2, VIM, VNFM, NFVO, and, finally, a predictive entity labelled as "Pred.Ent" in the figure. The roles of these entities have been described above, for example in connection with FIGURE 2. The numbers in parentheses refer to reference numbers of FIGURE 2. Depending on a type of VNF used, a separate element manager, EM, may further be comprised in the system. Such an EM is not illustrated in FIGURE 4A.

Initially, in phase 410, a VNF is running on computational substrate NFVI-1. In phase 420, which overlaps in time with phase 410, the predictive entity is informed of, or determines from information received from the VNF or NFVI-1, that the computational substrate NFVI-1 is in the process of a developing fault condition. Alternatively, or additionally, an EM, the VNFM or the VIM may be a source of the information enabling the determination that the VNF or NFVI-1 is in a developing fault condition. The predictive entity may determine the developing fault based on error frequency, error pattern, status change frequency or status change pattern, as described above.

In phase 430, the predictive entity may validate affinity rules. In phase 430, the predictive entity may take a decision, responsive to the determination of the developing fault condition, to scale out the VNF running on substrate NFVI-1. The predictive entity initiates the scale-out in phase 440 by signalling to the NFVO. The NFVO in turn initiates the scale-out, as a response to phase 440, in phase 450 by signalling to the VNF manager VNFM. The VNFM causes the scale-out to occur in phase 460 by instructing the VIM. The VIM scales the VNF from NFVI-1 to NFVI-2 by allocating computational resources in NFVI-2, phase 470. As a consequence, the VNF is operating in substrate NVFI-2, phase 480, before the developing fault condition in NFVI-1 reaches a point where substrate NFVI-1 enters a failure state, phase 490. The messaging flow from the predictive entity to the VIM may, in some embodiments, further traverse an element manager, EM.

Where the predictive entity decides, instead of a scale-out, to perform a live migration of the VNF from substrate NFVI-1 to substrate NFVI-2, phases 410, 420 and 430 may proceed as illustrated in FIGURE 4A. Subsequently, the predictive entity may signal directly to the VIM, to instruct the VIM to cause the live migration to occur, and VIM may responsively cause the live migration to occur by signalling to NFVI-2.

FIGURE 4B illustrates signalling in accordance with at least some embodiments of the present invention. The vertical axes of FIGURE 4B differ from those of FIGURE 4A only in the sense that FIGURE 4B further comprises a vertical axis corresponding to an element manager, EM. As in FIGURE 4A, time advances from the top toward the bottom.

In phase 4100, a VNF is running in substrate NFVI-1, as in phase 410 of FIGURE 4A. In phase 4110, the predictive entity determines that the VNF or NFVI-1 is in a developing fault condition, for example due to a software failure in the VNF, or a software or hardware fault affecting substrate NFVI-1. The predictive entity may determine the developing fault condition by periodically polling the VNF, for example, and/or by analysing information originating in the VNF, NFVI-1, EM, VNFM and/or the VIM. Responsive to the determination of phase 4110, the predictive entity may decide to perform a live migration of the VNF, phase 4120, and signal to the VIM to cause it to perform the live migration, phase 4130. The VIM may responsively perform the live migration to substrate NFVI-2, phase 4140. In phase 4150 the live migrated VNF runs on substrate NFVI-2, before the developing fault condition in substrate NFVI-1 develops into a failure, the failure being indicated in FIGURE 4B as phase 4160. The VNF that is in the developing fault condition may, in some embodiments, be terminated before it goes into a failure state. Such a termination may be done to conserve resources, for example, or, where applicable, increase computational stability.

In general, not only relating to FIGURE 4B or 4A, a replacement VNF may be caused to run on a different substrate than the one the determined fault condition directly affects. A replacement VNF may comprise a re-instantiated VNF, a scaled out VNF or a live migrated VNF, for example. Alternatively to a complete VNF, a VNFC may be replaced as described above instead, in case the developing fault condition affects only a subset of VNFCs of a VNF.

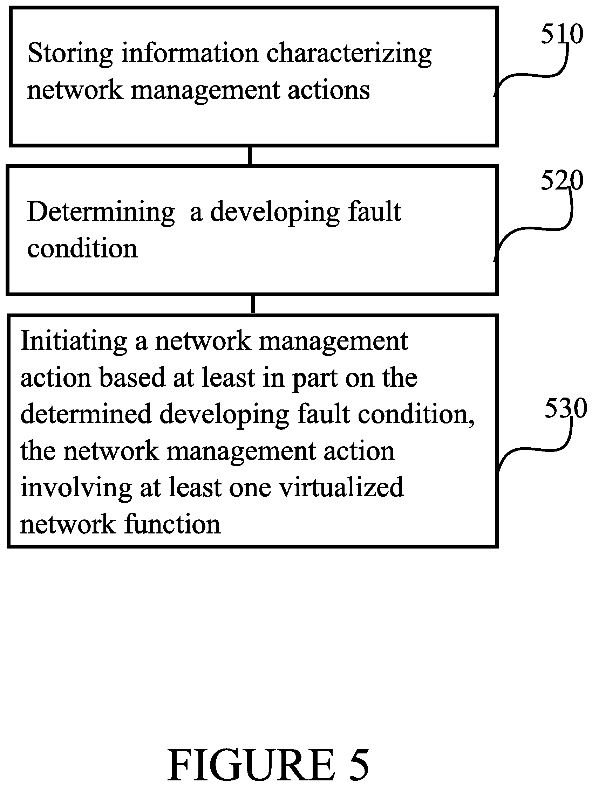

FIGURE 5 is a first flow chart of a first method in accordance with at least some embodiments of the present invention. The phases of the illustrated method may take place in a VNFM or other network management node comprised in a network that controls, at least in part, network function virtualization. The phases of the illustrated method may in particular be performed in a control device configured to control the functioning of a network management node, when implanted therein.

Phase 510 comprises storing information characterizing network management actions. Phase 520 comprises determining a developing fault condition. Finally, phase 530 comprises initiating a network management action based at least in part on the determined developing fault condition, the network management action involving at least one virtualized network function.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, described features, structures, or characteristics may be combined in any suitable or technically feasible manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A system in a communication network with virtualized functions comprising:
means for storing information (320) characterizing network management actions, wherein the system further comprises
means (280) for determining a developing fault condition based at least in part on at least one of the following: a pattern of read/write errors and a pattern of status changes comprising a pattern of communication port status changes, and initiating (230) a network management action based at least in part on the determined developing fault condition, the network management action involving at least one virtualized network function (210).

2. The system according to claim 1, wherein the system comprises means (320, 280, 230) for performing a method in accordance with any of claims 4 to 11.

3. A method implemented in a system in a communication network with virtualized functions comprising:
storing (510) information characterizing network management actions;
wherein the method further comprises:
determining (520) a developing fault condition based at least in part on at least one of the following: a pattern of read/write errors and a pattern of status changes comprising a pattern of communication port status changes, and
initiating (530) a network management action based at least in part on the determined developing fault condition, the network management action involving at least one virtualized network function (210).

4. The method according to claim 3, wherein the network management action comprises at least one of the following: increasing resources allocated to a virtualized network function (210), starting a virtualized network function instance (276), terminating a virtualized network function instance (276) and live migrating a virtualized network function instance (276).

5. The method according to claim 3 or 4, further comprising determining an importance of the virtualized network function (210), the virtualized network function (210) being affected by the determined developing fault condition, and selecting the network management action at least in part in dependence of the determined importance of the virtualized network function.

6. The method according to claim 5, wherein the pattern of status changes comprises a pattern of communication port status changes.

7. The method according to claim 6 , wherein the read/write errors comprise at least one of random access memory read/write errors, solid state drive read/write errors and magnetic disk read/write errors.

8. The method according to any of claims 3 - 7, wherein the at least one virtualized network function (210) comprises at least one of the following: a virtualized base station function (120v), a virtualized call session control function, CSCF, a virtualized switching centre, a virtualized mobility management entity, a virtualized home subscriber server, a virtualized equipment identity register and a virtualized gateway function.

9. The method according to any of claims 3 - 8, comprising performing the method in a virtualized cellular communication network management device in a system further comprising a network functions virtualization orchestrator function (270) configured to, responsive to a trigger from the virtualized cellular communication network management device, cause the network management action to be implemented.

10. The method according to any of claims 3 - 9, further comprising determining the developing fault condition in at least one of the virtualized network function (210) and a computation apparatus (1V1, 1V2) arranged to run the virtualized network function (210).

11. The method according to claim 10, further comprising determining the developing fault condition in the computation apparatus, determining a plurality of virtualized network functions (210) running in the computation apparatus (1V1, 1V2), and arranging at least two from among the plurality of virtualized network functions (210) according to their relative priority.

12. A computer program implemented on a computer-readable medium configured to cause a method in accordance with any of claims 3 - 11 to be performed by a computer.

## Patentansprüche

1. System in einem Kommunikationsnetzwerk mit virtualisierten Funktionen, das Folgendes umfasst:
ein Mittel zum Speichern von Informationen (320), die Netzwerkverwaltungsaktionen charakterisieren, wobei das System ferner Folgendes umfasst
ein Mittel (280) zum Bestimmen eines sich entwickelnden Fehlerzustands mindestens teilweise auf Basis von mindestens einem von Folgendem: einem Muster von Lese-/Schreibfehlern und einem Muster von Statusänderungen, das ein Muster von Kommunikationsportstatusänderungen umfasst, und Initiieren (230) einer Netzwerkverwaltungsaktion mindestens teilweise auf Basis des bestimmten sich entwickelnden Fehlerzustands, wobei die Netzwerkverwaltungsaktion mindestens eine virtualisierte Netzwerkfunktion (210) beinhaltet.

2. System nach Anspruch 1, wobei das System Mittel (320, 280, 230) zum Durchführen eines Verfahrens nach einem der Ansprüche 4 bis 11 umfasst.

3. Verfahren, das in einem System in einem Kommunikationsnetzwerk mit virtualisierten Funktionen implementiert wird und Folgendes umfasst:
Speichern (510) von Informationen, die Netzwerkverwaltungsaktionen charakterisieren;
wobei das Verfahren ferner Folgendes umfasst:
Bestimmen (520) eines sich entwickelnden Fehlerzustands mindestens teilweise auf Basis von mindestens einem von Folgendem: einem Muster von Lese-/Schreibfehlern und einem Muster von Statusänderungen, das ein Muster von Kommunikationsportstatusänderungen umfasst, und
Initiieren (530) einer Netzwerkverwaltungsaktion mindestens teilweise auf Basis des bestimmten sich entwickelnden Fehlerzustands, wobei die Netzwerkverwaltungsaktion mindestens eine virtualisierte Netzwerkfunktion (210) beinhaltet.

4. Verfahren nach Anspruch 3, wobei die Netzwerkverwaltungsaktion mindestens eines von Folgendem umfasst: Erhöhen von Ressourcen, die einer virtualisierten Netzwerkfunktion (210) zugeteilt sind, Starten einer virtualisierten Netzwerkfunktionsinstanz (276), Beenden einer virtualisierten Netzwerkfunktionsinstanz (276) und Livemigrieren einer virtualisierten Netzwerkfunktionsinstanz (276) .

5. Verfahren nach Anspruch 3 oder 4, das ferner das Bestimmen einer Bedeutung der virtualisierten Netzwerkfunktion (210), wobei die virtualisierte Netzwerkfunktion (210) von dem bestimmten sich entwickelnden Fehlerzustand beeinträchtigt wird, und das Auswählen der Netzwerkverwaltungsaktion mindestens teilweise in Abhängigkeit von der bestimmten Bedeutung der virtualisierten Netzwerkfunktion umfasst.

6. Verfahren nach Anspruch 5, wobei das Muster von Statusänderungen ein Muster von Kommunikationsportstatusänderungen umfasst.

7. Verfahren nach Anspruch 6, wobei die Lese-/Schreibfehler mindestens eines von Lese-/Schreibfehlern in einem Direktzugriffsspeicher, Lese-/Schreibfehlern auf einem Halbleiterlaufwerk und Lese-/Schreibfehlern auf einer Magnetplatte umfassen.

8. Verfahren nach einem der Ansprüche 3-7, wobei die mindestens eine virtualisierte Netzwerkfunktion (210) mindestens eines von Folgendem umfasst: eine virtualisierte Basisstationsfunktion (120v), eine virtualisierte Anrufsitzungssteuerfunktion, CSCF, ein virtualisiertes Switchingzentrum, eine virtualisierte Mobilitätsverwaltungsentität, einen virtualisierten Heimteilnehmerserver, ein virtualisiertes Ausrüstungsidentitätsregister und eine virtualisierte Gatewayfunktion.

9. Verfahren nach einem der Ansprüche 3-8, das das Durchführen des Verfahrens in einer Verwaltungsvorrichtung für ein virtualisiertes zellulares Kommunikationsnetzwerk in einem System umfasst, das ferner eine Netzwerkfunktionsvirtualisierungorchestratorfunktion (270) umfasst, die dazu ausgelegt ist, in Reaktion auf einen Auslöser von der Verwaltungsvorrichtung für ein virtualisiertes zellulares Kommunikationsnetzwerk die Implementierung der Netzwerkverwaltungsaktion zu bewirken.

10. Verfahren nach einem der Ansprüche 3-9, das ferner das Bestimmen des sich entwickelnden Fehlerzustands in mindestens einer der virtualisierten Netzwerkfunktion (210) und einer Datenverarbeitungseinrichtung (1V1, 1V2), die angeordnet ist, die virtualisierte Netzwerkfunktion (210) auszuführen, umfasst.

11. Verfahren nach Anspruch 10, das ferner das Bestimmen des sich entwickelnden Fehlerzustands in der Datenverarbeitungseinrichtung, das Bestimmen einer Vielzahl von virtualisierten Netzwerkfunktionen (210), die in der Datenverarbeitungseinrichtung (1V1, 1V2) ausgeführt werden, und das Anordnen von mindestens zwei der Vielzahl von virtuellen Netzwerkfunktionen (210) gemäß ihrer relativen Priorität umfasst.

12. Computerprogramm, das auf einem computerlesbaren Medium implementiert wird, das dazu ausgelegt ist zu bewirken, dass ein Verfahren nach einem der Ansprüche 3-11 von einem Computer durchgeführt wird.

## Revendications

1. Système dans un réseau de communication avec des fonctions virtualisées comprenant :
des moyens pour stocker des informations (320) caractérisant des actions de gestion de réseau, où le système comprend en outre
des moyens (280) pour déterminer une condition de défaut se développant sur la base au moins en partie d'au moins l'un de ce qui suit : un modèle d'erreurs de lecture/écriture et un modèle de changements d'état comprenant un modèle de changements d'état de port de communication, et initier (230) une action de gestion de réseau sur la base au moins en partie de la condition de défaut se développant déterminée, l'action de gestion de réseau impliquant au moins une fonction de réseau virtualisée (210).

2. Système selon la revendication 1, dans lequel le système comprend des moyens (320, 280, 230) pour réaliser un procédé selon l'une quelconque des revendications 4 à 11.

3. Procédé mis en œuvre dans un système dans un réseau de communication avec des fonctions virtualisées comprenant :
le stockage (510) d'informations caractérisant des actions de gestion de réseau, où le procédé comprend en outre :
la détermination (520) d'une condition de défaut se développant sur la base au moins en partie d'au moins l'un de ce qui suit : un modèle d'erreurs de lecture/écriture et un modèle de changements d'état comprenant un modèle de changements d'état de port de communication, et
l'initiation (530) d'une action de gestion de réseau sur la base au moins en partie de la condition de défaut se développant déterminée, l'action de gestion de réseau impliquant au moins une fonction de réseau virtualisée (210).

4. Procédé selon la revendication 3, dans lequel l'action de gestion de réseau comprend au moins l'un de ce qui suit : augmentation de ressources allouées à une fonction de réseau virtualisée (210), démarrage d'une instance de fonction de réseau virtualisée (276), terminaison d'une instance de fonction de réseau virtualisée (276) et migration en direct d'une instance de fonction de réseau virtualisée (276).

5. Procédé selon la revendication 3 ou 4, comprenant en outre la détermination d'une importance de la fonction de réseau virtualisée (210), la fonction de réseau virtualisée (210) étant affectée par la condition de défaut se développant déterminée, et la sélection de l'action de gestion de réseau au moins en partie en fonction de l'importance déterminée de la fonction de réseau virtualisée.

6. Procédé selon la revendication 5, dans lequel le modèle de changements d'état comprend un modèle de changements d'état de port de communication.

7. Procédé selon la revendication 6, dans lequel les erreurs de lecture/écriture comprennent au moins l'une parmi des erreurs de lecture/écriture de mémoire à accès aléatoire, des erreurs de lecture/écriture de disque statique à semiconducteurs et des erreurs de lecture/écriture de disque magnétique.

8. Procédé selon l'une quelconque des revendications 3 à 7, dans lequel l'au moins une fonction de réseau virtualisée (210) comprend au moins l'un de ce qui suit : une fonction de station de base virtualisée (120v), une fonction de contrôle de session d'appel virtualisée, CSCF, un centre de commutation virtualisé, une entité de gestion de mobilité virtualisée, un serveur d'abonné résidentiel virtualisé, un registre d'identité d'équipement virtualisé et une fonction de passerelle virtualisée.

9. Procédé selon l'une quelconque des revendications 3 à 8, comprenant la réalisation du procédé dans un dispositif de gestion de réseau de communication cellulaire virtualisé dans un système comprenant en outre une fonction d'orchestrateur de virtualisation de fonctions de réseau (270) configurée pour, en réponse à un déclencheur du dispositif de gestion de réseau de communication cellulaire virtualisé, amener l'action de gestion de réseau à être mise en œuvre.

10. Procédé selon l'une quelconque des revendications 3 à 9, comprenant en outre la détermination de la condition de défaut se développant dans au moins l'un de la fonction de réseau virtualisée (210) et d'un appareil de calcul (1V1, 1V2) agencé pour exécuter la fonction de réseau virtualisée (210).

11. Procédé selon la revendication 10, comprenant en outre la détermination de la condition de défaut se développant dans l'appareil de calcul, la détermination d'une pluralité de fonctions de réseau virtualisées (210) s'exécutant dans l'appareil de calcul (1V1, 1V2), et l'agencement d'au moins deux parmi la pluralité de fonctions de réseau virtualisées (210) selon leur priorité relative.

12. Programme informatique mis en œuvre sur un support lisible par ordinateur configuré pour amener un procédé selon l'une quelconque des revendications 3 à 11 à être réalisé par un ordinateur.
